# EUROPÄISCHE PATENTSCHRIFT

(11) **EP 3 589 382 B1**
(45) Veröffentlichungstag und Bekanntmachung des Hinweises auf die Patenterteilung: **13.09.2023**
(21) Anmeldenummer: 18712800.4
(22) Anmeldetag: 27.02.2018
(51) Int. Cl.: B01D 35/147, B01D 29/23, B01D 29/54, B01D 29/64, B01D 29/68, B01D 29/58

(54) **FILTERVORRICHTUNG**
FILTER DEVICE
DISPOSITIF DE FILTRATION

(30) Priorität: 01.03.2017 DE 102017001968
(43) Veröffentlichungstag der Anmeldung: 08.01.2020
(73) Patentinhaber: Hydac Process Technology GmbH, 66538 Neunkirchen (DE)
(72) Erfinder: LINGEN, Hans-Jürgen, 41069 Mönchengladbach (DE); KLEIN, Stefan, 53902 Bad Münstereifel (DE); KLEIN, Raphael, 50226 Frechen (DE); HRIN, Sebastian, 50189 Elsdorf (DE)
(74) Vertreter: Bartels und Partner, Patentanwälte
(86) Internationale Anmeldenummer: PCT/EP2018/054770
(87) Internationale Veröffentlichungsnummer: WO 2018/158230

(56) Entgegenhaltungen:
- WO-A1-2016/085107
- DE-U1-202014 104 200
- DE-U1-202016 003 089

## Beschreibung

Die Erfindung betrifft eine Filtervorrichtung, insbesondere für die Schmierölfiltration, mit den Merkmalen im Oberbegriff von Anspruch 1.

Für die Betriebssicherheit und Lebensdauer von Verbrennungsmotoren ist die einwandfreie Beschaffenheit des Schmieröls von großer Bedeutung. Insbesondere stellt der Dauerbetrieb von Dieselmotoren, die beispielsweise bei maritimen Anwendungen mit Schweröl betrieben werden, besonders hohe Anforderungen an die Beschaffenheit des Schmieröls, so dass bei solchen Anwendungen der Einsatz von Filtervorrichtungen zur Schmierölreinigung unerlässlich ist. Diesbezüglich ist es Stand der Technik, Filtervorrichtungen zu benutzen, bei denen Filtereinsätze rückspülbar sind, um längere Laufzeiten zwischen dem Wechsel von Filtereinsätzen zu ermöglichen und dadurch Wartungskosten gering zu halten. Eine dahingehende Filtervorrichtung ist beispielhaft in der DE 202016 003 089 U1 aufgezeigt.

Die DE 20 2014 104 200 U1 beschreibt eine Filtervorrichtung, insbesondere für die Schmierölfiltration, mit den Merkmalen im Oberbegriff von Anspruch 1, bestehend aus mindestens einem Filtereinsatz in dem jeweils ein Filtermaterial aufgenommen ist und mit Fluid-Durchlassstellen versehen ist, die von Wandteilen des Filtereinsatzes begrenzt sind, und mit einer Rückspüleinrichtung, die mindestens eine Spüldüse aufweist, die mittels einer hohlen Antriebswelle entlang der Innenseite des jeweils zuordenbaren Filtereinsatzes verfahrbar ist, wobei für jeden Filtereinsatz mindestens ein Paar von Spüldüsen vorgesehen sind, die in axialer Ausrichtung der Antriebswelle übereinander angeordnete Längsschlitze aufweisen.

Eine weitere Filtervorrichtung geht aus der WO 2016/085107 A1 hervor.

Der Erfindung liegt die Aufgabe zugrunde, eine Filtervorrichtung dieser Gattung zur Verfügung zu stellen, die sich, insbesondere beim Rückspülbetrieb, durch ein besonders günstiges Betriebsverhalten auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass für jeden Filtereinsatz mindestens ein Paar von Spüldüsen vorgesehen ist, die in axialer Ausrichtung der Antriebswelle übereinander angeordnete Längsschlitze aufweisen, die derart einen quer zur axialen Ausrichtung verlaufenden Versatz zueinander aufweisen, dass bei benachbart angeordneten Spüldüsen zumindest ein Teil des Längsschlitzes der einen Spüldüse in Deckung mit mindestens einer der Fluid-Durchlassstellen des zuordenbaren Filtereinsatzes und der Längsschlitz der anderen Spüldüse in Deckung mit diese Fluid-Durchlassstelle begrenzenden Wandteilen dieses Filtereinsatzes ist.

Von den für den Rückspülstrom zur Verfügung stehenden Strömungskanälen, die an den Fluid-Durchlassstellen von den Wandteilen des Filtereinsatzes begrenzt sind, ist bei dieser Anordnung jeweils ein Strömungskanal geöffnet, während der Strömungskanal an der sich anschließenden Fluid-Durchlassstelle geschlossen ist. Bei der kontinuierlichen Rotation der Spüldüsenpaare gehen dadurch die Rückspülströme durch die Überschneidung der Rückspüldüsen ineinander über, so dass sich eine kontinuierliche Rückspülmenge einstellt. Dank der so pulsationsgedämpften Rückspülung ist auch der durch einen sich wiederholenden Strömungsabriss verursachte pulsierende Kraftangriff auf die jeweilige Spüldüse vermieden. Da für jeden Filtereinsatz ein Spüldüsenpaar mit Versatz vorgesehen ist, ist die vorteilhafte Pulsationsdämpfung auch mit Filtervorrichtungen erreichbar, bei denen nur ein einziger Filtereinsatz eingesetzt ist.

Bei vorteilhaften Ausführungsbeispielen weist der jeweilige Filtereinsatz ein Filtergehäuse auf, mit zwei konzentrisch zur Längsachse des Filtereinsatzes angeordneten Gehäusewänden, zwischen denen sich das Filtermaterial erstreckt und die von den fensterartigen Fluid-Durchlassstellen durchbrochen sind.

Mit Vorteil ist die Anordnung derart getroffen, dass jedes Paar von Spüldüsen mittels der motorisch antreibbaren Antriebswelle der Rückspüleinrichtung gemeinsam entlang der Innenseite des jeweils zuordenbaren, zylindrischen Filtereinsatzes rotatorisch in Hintereinanderabfolge die benachbart angeordneten Fluid-Durchlassstellen im Filtergehäuse überfährt.

Bei besonders vorteilhaften Ausführungsbeispielen weist die Antriebswelle für jedes Paar von Spüldüsen eine in Richtung des zuordenbaren Filtergehäuses vorragende Führungseinrichtung auf, in die die jeweilige Spüldüse längsverfahrbar geführt eingreift, die mittels eines Energiespeichers gegen die Innenseite dieses Filtergehäuses gedrückt ist. Dadurch ist eine besonders sichere, nachgiebige Lagerung des jeweiligen Spüldüsenpaares an der Antriebswelle realisierbar, wobei durch die Führungseinrichtung ein Verklemmen oder Verkanten vermieden ist.

Der Energiespeicher kann in vorteilhafter Weise aus einem elastisch wirkenden Dichtring gebildet sein, der sich mit seiner einen Seite an der Antriebswelle und mit seiner anderen Seite an der jeweiligen Spüldüse abstützt.

Bei besonders vorteilhaften Ausführungsbeispielen ist ein Paar von Spüldüsen in einer Baueinheit zusammengefasst, die mit ihrem jeweils radial innenliegenden Querschnitt über die Führungseinrichtung in die hohle Antriebswelle einmünden und die mit ihrem jeweils radial außenliegenden Querschnitt in einen Längsschlitz ausmünden, der von seinen Abmessungen her an die Geometrie der jeweils zu überfahrenden Fluid-Durchlassstelle angepasst ist.

Mit Vorteil kann die Anordnung so getroffen sein, dass die beiden aus Stützkörpern gebildeten Gehäusewände eines Filtergehäuses an ihren stirnseitig einander gegenüberliegenden Enden von einem ringförmigen Abschlussteil verschlossen sind, das einen Fluidraum für die Aufnahme von Unfiltrat umfasst, wobei das Filtergehäuse zwischen den beiden Stützkörpern von einer ringförmigen Trennwand durchgriffen ist, vorzugsweise gebildet aus einem inneren und einem äußeren Stützring. Mit Vorteil können hierbei die das Filtergehäuse bildenden Bauteile aus Spritzgussteilen aus Kunststoff, wie PA6, gebildet sein.

Zwischen den Abschlussteilen und der dazwischenliegenden Trennwand eines Filtergehäuses können sich Längsstäbe für jede Gehäusewand erstrecken, die die fensterartigen Fluid-Durchlassstellen im Filtergehäuse käfigartig zwischen sich einschließen.

In besonders vorteilhafter Weise können die dem jeweiligen Spüldüsenpaar benachbarten, inneren Längsstäbe der Käfiganordnung gegenüber der Radialrichtung eine Schrägstellung aufweisen, so dass sie für jede Fluid-Durchlassstelle eines Filtereinsatzes eine Strömungsrichtung vorgeben, die um einen vorgebbaren Winkel gegenüber der Einströmrichtung des jeweiligen Längsschlitzes eines Spüldüsenpaares geneigt ist. Dies führt zu einem die Ablösung von Verschmutzungen begünstigenden schrägen Strömungsverlauf durch das Filtermedium.

Mit Vorteil ist die Anordnung so getroffen, dass eine Filtrierung vom Inneren des jeweiligen Filtereinsatzes nach außen erfolgt, dass die Rückspülung des jeweiligen Filtereinsatzes von außen nach innen durchgeführt ist und dass die dabei entstehenden Rückspülmengen über die Rückspüleinrichtung aus der Filtervorrichtung abführbar sind, wobei der jeweilige Filtereinsatz stationär in einem Vorrichtungsgehäuse angeordnet ist, das einen Fluideinlass für Unfiltrat, einen Fluidauslass für Filtrat und einen Abfuhranschluss für die jeweilige Rückspülmenge aufweist.

Mit besonderem Vorteil können mehrere Filtereinsätze als Gleichteile in Übereinanderanordnung einen Komplett-Elementeinsatz bilden, wobei die einzelnen Filtereinsätze unlösbar, vorzugsweise klebend, miteinander verbunden sind.

Hierbei kann die Anordnung mit besonderem Vorteil so getroffen sein, dass der Komplett-Elementeinsatz zusammen mit der Rückspüleinrichtung als Ganzes tauschbar im Vorrichtungsgehäuse aufgenommen ist.

Nachstehend ist die Erfindung anhand eines in der Zeichnung dargestellten Ausführungsbeispiels im Einzelnen erläutert. Es zeigen:
- Fig. 1: in schematisch vereinfachter Darstellung einen Längsschnitt des Ausführungsbeispiels der erfindungsgemäßen Filtervorrichtung;
- Fig. 2: einen gegenüber Fig. 1 vergrößert gezeichneten Längsschnitt eines Filtereinsatzes aufweisenden Vorrichtungsteils von Fig.1 ;
- Fig. 3: eine vergrößert und explosionsartig auseinandergezogen gezeichnete perspektivische Schrägansicht eines Spüldüsenpaares mit zugehöriger, an der Antriebswelle des Ausführungsbeispiels befindlicher Führungseinrichtung;
- Fig. 4: einen Längsschnitt der Baueinheit von Fig. 3;
- Fig. 5: einen Teilquerschnitt eines Filtereinsatzes, entsprechend der Schnittlinie A-A von Fig. 2;
- Fig. 6: eine der Fig. 5 entsprechende Schnittdarstellung entsprechend der Schnittlinie B-B von Fig. 2;
- Fig. 7 bis 10: perspektivische Schrägansichten von Bauteilen des Filtergehäuses eines Filtereinsatzes;
- Fig. 11: eine perspektivische Schrägansicht des aus den Bauteilen gemäß Fig. 7 bis 10 zusammengesetzten Filtergehäuses, gesehen auf die Oberseite; und
- Fig. 12: eine der Fig. 11 entsprechende Darstellung, gesehen auf die Unterseite des Filtergehäuses.

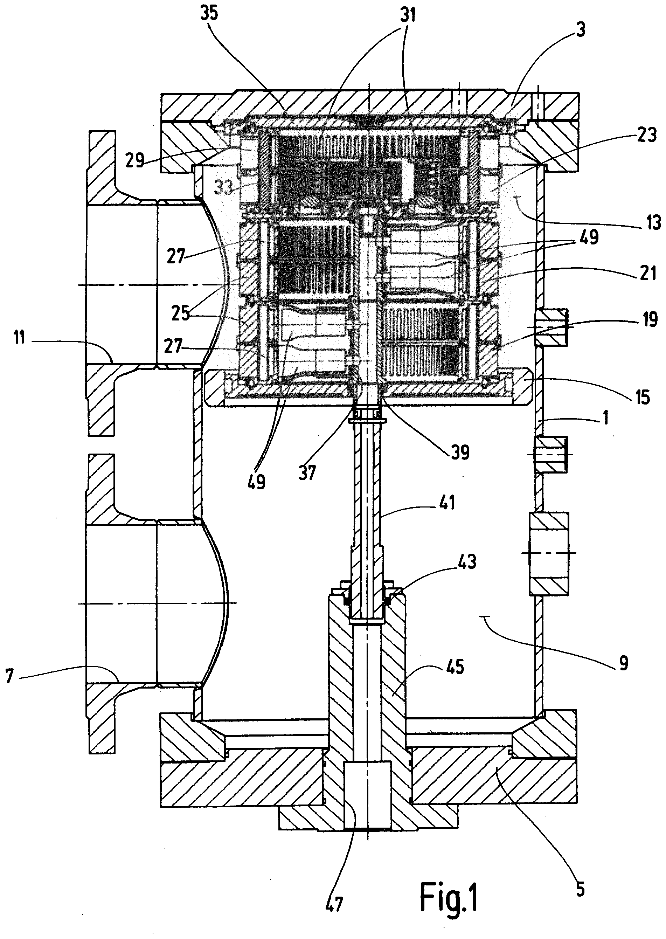

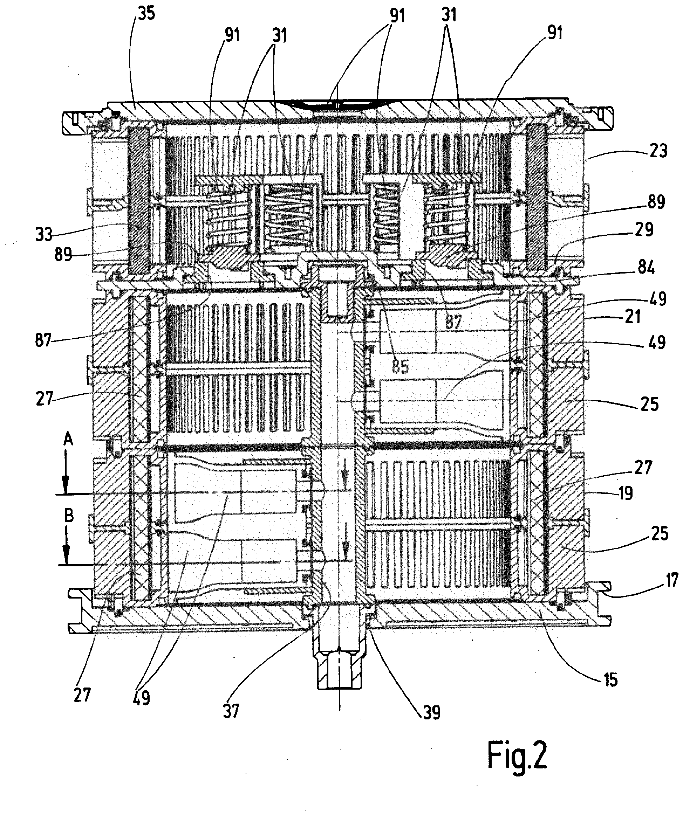

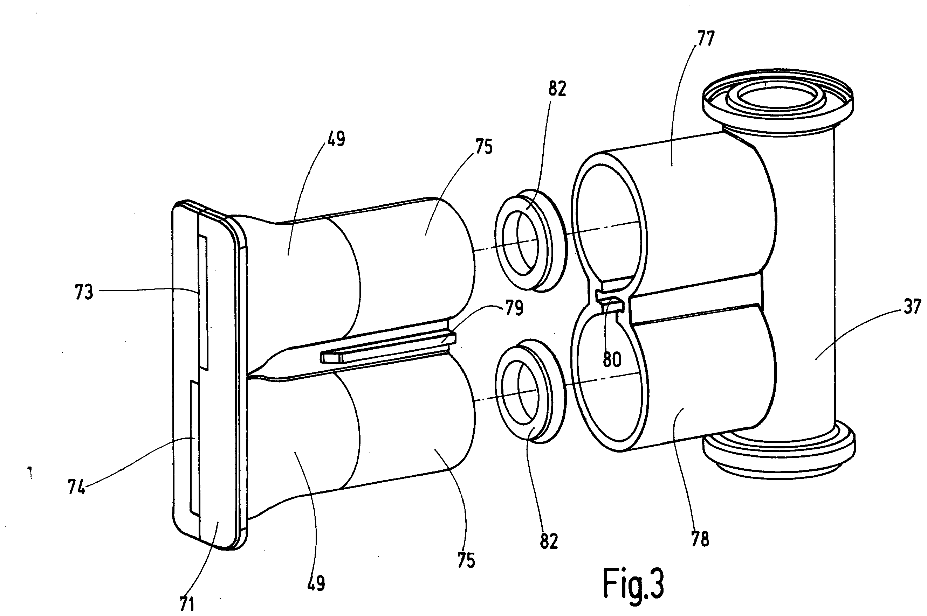

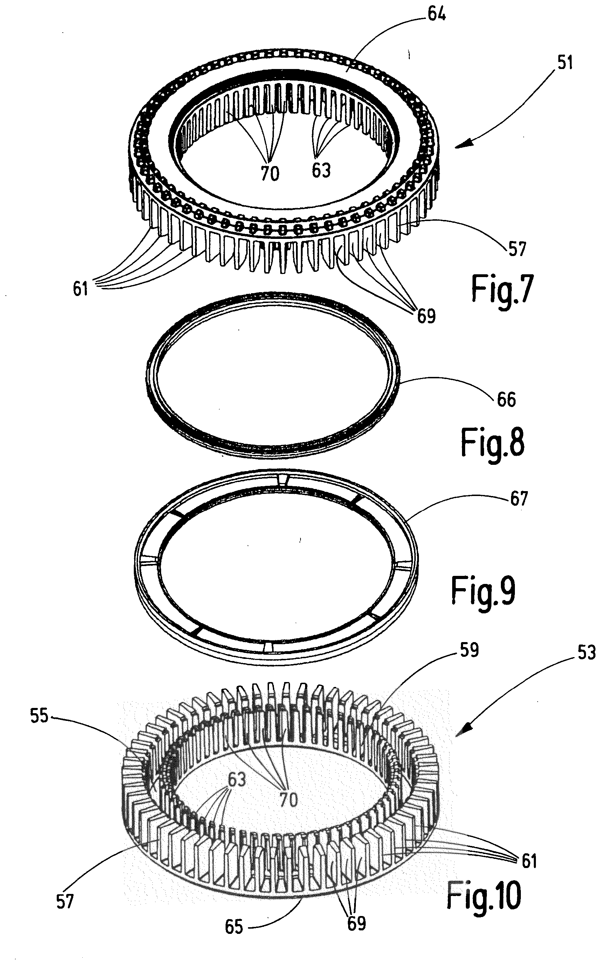

Das in Fig. 1 gezeigte Ausführungsbeispiel der erfindungsgemäßen Filtervorrichtung weist ein Vorrichtungsgehäuse mit einem Gehäusehauptteil 1 in Form eines Kreiszylinders auf, der am in der Zeichnung oberen Ende durch einen Gehäusedeckel 3 und am unteren Ende durch ein Bodenteil 5 geschlossen ist. In der Nähe des Bodenteils 5 befindet sich ein seitlicher Einlass 7, über den Unfiltrat in einen die Schmutzseite bildenden Raum 9 einströmbar ist. Oberhalb des Einlasses 7 und in der Nähe des oberen Gehäusedeckels 3 befindet sich ein seitlicher Auslass 11, über den Filtrat aus einem die Reinseite bildenden Raum 13 ausströmbar ist. Schmutzseitiger Raum 9 und darüberliegender reinseitiger Raum 13 sind durch eine Siebplatte 15 voneinander getrennt, die, wie Fig. 2 zeigt, eine umfängliche Ringnut 17 aufweist, die den Sitz für ein nicht dargestelltes Dichtelement bildet, das die Abdichtung zwischen Schmutzseite und Reinseite bildet. Die Siebplatte 15 bildet auch den Träger für drei übereinanderliegende Filtereinsätze 19, 21 und 23, die in Fig. 2 gesondert dargestellt sind. Von diesen weisen die unteren Filtereinsätze 19 und 21 ein Filtergehäuse 25 mit einem Filtermaterial 27 und mit einer Rückspüleinrichtung auf, die in Fig. 3 bis 6 näher dargestellt ist. Das Filtergehäuse 25 dieser Filtereinsätze 19, 21 ist in Fig. 7 bis 12 näher dargestellt. Der oberste Filtereinsatz 23 weist im Filtergehäuse 29 eine Gruppe von Bypassventilen 31 sowie ein Grobfilter 33 auf. Am oberen Ende ist das Gehäuse 29 des obersten Filtereinsatzes 23 durch einen Bypassdeckel 35 geschlossen.

Die Rückspüleinrichtungen in den Filtereinsätzen 19 und 21 sind an einer Antriebswelle 37 angebracht, die als Hohlwelle ausgebildet ist. An einer Lagerstelle 39 an der Siebplatte 15 schließt sich an die Antriebswelle 37 eine weitere Hohlwelle 41 an, deren unteres Ende unter Bildung eines Drehlagers 43 in einen Rohrstutzen 45 eingreift, der sich, vom Bodenteil 5 ausgehend, in den schmutzseitigen Raum 9 erstreckt. Der Rohrstutzen 45 setzt den für Rückspülmengen vorgesehene Strömungsweg, der von der Antriebswelle 37 in den Filtereinsätzen 19 und 21 ausgeht, bis zu einem Ausgang 47 am Bodenteil 5 fort. Ein, wie üblich, dem Ausgang 47 zugeordnetes Rückspülventil ist in Fig. 1 weggelassen, wie auch der bei Vorrichtungen dieser Gattung übliche, bekannte Drehantrieb, der durch Kupplungsverbindung mit der Hohlwelle 41 die Antriebswelle 37 der Rückspüleinrichtung in Rotation versetzt. In an sich bekannter Weise kann ein motorischer Antrieb oder ein durch Druckmittel betätigter Antrieb vorgesehen sein. Die Rückspüleinrichtung weist in jedem der unteren Filtereinsätze 19 und 21 ein Paar Spüldüsen 49 auf, von denen jedes Paar wie Fig. 1 und 2 zeigen, in um 180° versetzter Drehposition und axial übereinanderliegend an der Antriebswelle 37 befestigt ist. Die Einzelheiten der Spüldüsen 49 sind am deutlichsten in den Fig. 3 bis 6 dargestellt, worauf unten eingegangen wird.

Die Einzelheiten der als Gleichteile ausgebildeten Filtergehäuse 25 der beiden unteren Filtereinsätze 19 und 21 sind am deutlichsten den Fig. 7 bis 12 entnehmbar. Die Filtergehäuse 25 weisen einen oberen Stützkörper 51, der in Fig. 7 gesondert dargestellt ist, sowie einen unteren Stützkörper 53 auf, der in Fig. 10 gesondert dargestellt ist. Beide Stützkörper 51, 53 weisen, wie am deutlichsten in der Fig. 10 für den unteren Stützkörper 53 gezeigt ist, zwei zur Gehäuselängsachse konzentrisch verlaufende und zwischen sich einen Zwischenraum 55 (Fig. 10) bildende Gehäusewände auf, deren äußere mit 57 und deren innere mit 59 bezeichnet ist. jede Gehäusewand 57, 59 ist durch einen Kranz aus einer Vielzahl von Längsstegen 61 bzw. 63 gebildet, von denen der Übersichtlichkeit halber lediglich einige in Fig. 7 und 10 beziffert sind. Die Längsstege 61, 63 des oberen Stützkörpers 51 erstrecken sich von einem oberen Abschlussteil 64 nach unten, das durch einen Ringkörper gebildet ist. In entsprechender Weise gehen die Längsstege 61, 63 des unteren Stützkörpers 53 von einem unteren Abschlussteil 65 aus, das ebenfalls durch einen Ringkörper gebildet ist. Vervollständigt ist das Filtergehäuse 25 durch das im Zwischenraum 55 des oberen Stützkörpers 51 und des unteren Stützkörpers 53 jeweils aufgenommene Filtermaterial 27. Dieses besteht jeweils aus einer plissierten Filtermattenbahn aus zumindest einer Filterlage, an deren beiden Außenseiten sich je eine Stützlage in Form einer Gitterstruktur befindet. Bei vorteilhaften Beispielen liegt die Filterfeinheit im Bereich von 25 *µ*m bis 34 *µ*m. Für den Zusammenbau des Filtergehäuses 25 nach Einlegen des jeweiligen Filtermaterials 27 in die Zwischenräume 55 von oberem und unterem Stützkörper 51, 53 wird eine Trennwand durch Anbringen eines in Fig. 8 gezeigten inneren Stützringes 66 auf den Enden der inneren Längsstege 63 und Anbringen eines in Fig. 9 gezeigten äußeren Stützringes 67 gebildet, der an den freien Enden der äußeren Längsstege 61 anliegt. Die aus einem Kunststoffmaterial, wie PA6, gegebenenfalls mit ölfester Beschichtung, spritzgegossenen, in Fig. 7 bis 10 gesondert dargestellten Bauteile werden dann fest miteinander verbunden, beispielsweise durch Schweißen oder vorzugsweise Kleben.

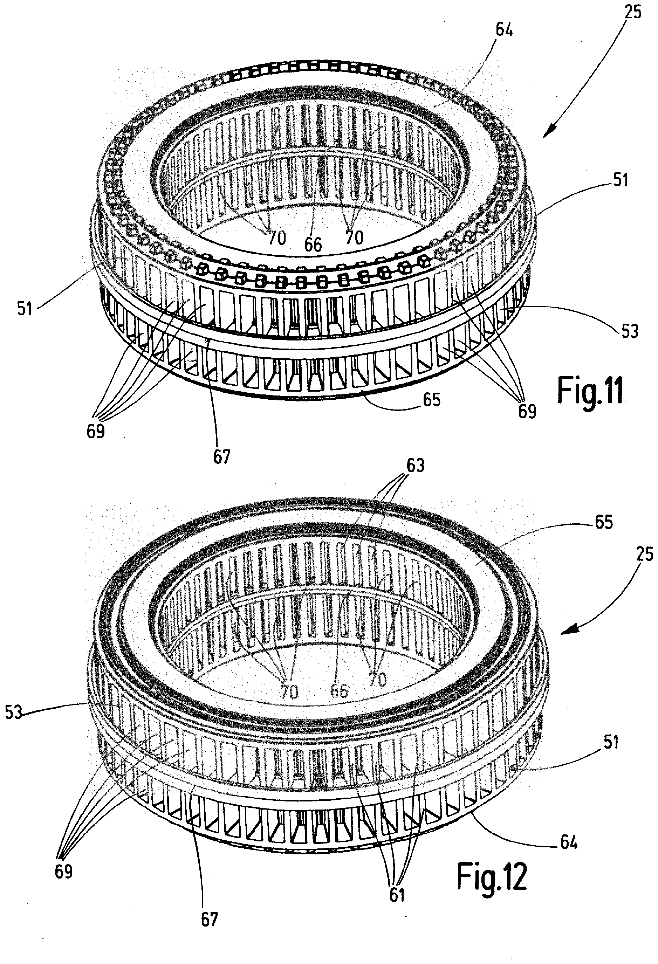

Bei dem aus den Stützkörpern 51 und 53 zusammengesetzten Filtergehäuse 25 sind die Längsstege 61 und 63 von unterem und oberem Stützkörper 53 bzw. 51 fluchtend zueinander ausgerichtet, so dass zwischen benachbarten Stegen 61 jeweils äußere Fluid-Durchlassstellen 69 und zwischen den inneren Längsstegen 63 jeweils innere Fluid-Durchlassstellen 70 gebildet sind, die in Fig. 11 und 12 jeweils nur teilweise beziffert sind. Bei dem vorliegenden Ausführungsbeispiel, bei dem zwei Filtereinsätze 19 und 21 übereinander angeordnet sind, sind die Filtergehäuse 25 der Filtereinsätze 19 und 21 fest miteinander verbunden. Hierfür ist das obere Abschlussteil 64 des unteren Filtergehäuses 25 mit dem unteren Abschlussteil 65 des oberen Filtergehäuses 25 verklebt.

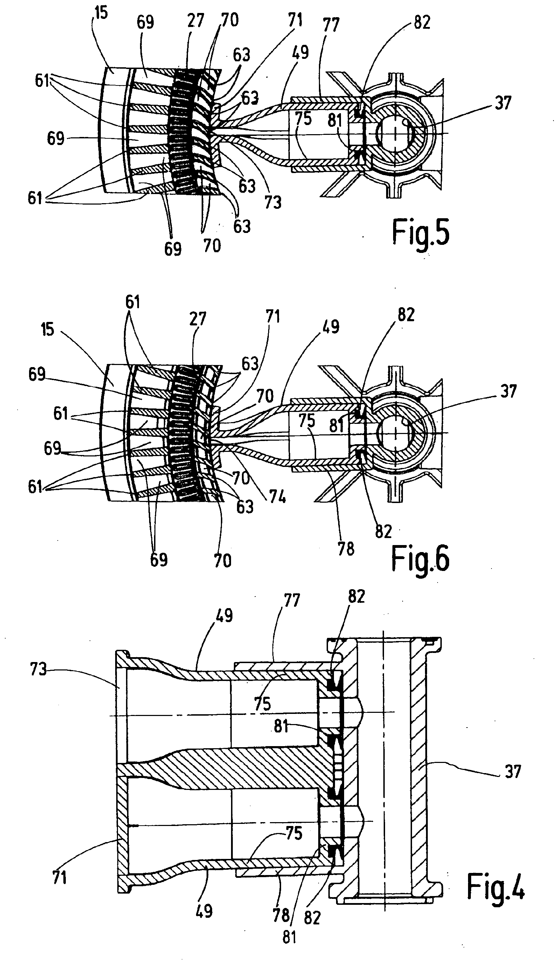

Wie bereits erwähnt, zeigen die Fig. 3 bis 6 Einzelheiten der Rückspüleinrichtung, wobei in Fig. 3 und 4 ein Paar der Spüldüsen 49 mit dem zugeordneten Abschnitt der Antriebswelle 37 gesondert dargestellt ist. Die Spüldüsen 49 des Paares sind zu einem einstückigen Formkörper vereinigt, der aus einem Kunststoffwerkstoff, wie PA6, spritzgegossen ist. An der von der Antriebswelle 37 abgewandten Stirnseite befindet sich eine sich in axialer Ausrichtung über die gesamte Höhe der Spüldüsen 49 erstreckende Stirnplatte 71, die im Betrieb bei der Rotation der Antriebswelle 37 sich in unmittelbarer Nähe des Innenumfanges der inneren Längsstege 63 des Filtergehäuses 25 bewegen. Hierfür weist die Stirnplatte 71 eine der Geometrie des Innenumfanges angepasste, geringfügige Wölbung auf. In der Stirnplatte 71 ist als Eingang für die obenliegende Spüldüse 49 ein sich in Axialausrichtung erstreckender Längsschlitz 73 und als Eingang für die untere Spüldüse 49 ein sich ebenfalls in Axialausrichtung erstreckender Längsschlitz 74 ausgebildet.

Wie Fig. 3 zeigt, sind die Längsschlitze 73, 74 in Rotationsrichtung zueinander versetzt. Wie Fig. 4 bis 6 zeigen, setzt sich in den Spüldüsen 49 der Fluidweg vom Längsschlitz 73, 74 zu einem radial innenliegenden Rohrkörper 75 fort. Zur Bildung der Verbindung des Paares der Spüldüsen 49 mit der Antriebswelle 37 sind an dieser ein oberer Tubus 77 und ein unterer Tubus 78 angebracht, die ins Innere der hohlen Antriebswelle 37 einmünden. Die Tuben 77, 78 bilden zusammen mit den in sie eingreifenden Rohrkörpern 75 eine teleskopartige Führungseinrichtung für das Paar der Spüldüsen 49. Vervollständigt wird diese Führungseinrichtung durch zwischen den Rohrkörpern 75 der Spüldüsen 49 sich in Radialausrichtung erstreckende seitliche Führungsschienen 79, die, siehe Fig. 3, in einen Führungskanal 80 zwischen den Tuben 77, 78 eingreifen. Wie Fig. 4 bis 6 zeigen, befindet sich am radial innenliegenden Austrittsende der Rohrkörper 75 jeweils ein radial nach innen vorstehender Bund 81, der die Anlage für jeweils einen Dichtring 82 bildet. Diese bestehen aus einem elastisch wirkenden Werkstoff, so dass sie in Doppelfunktion neben der Abdichtung eine Art Energiespeicher bilden, der die mittels der Führungseinrichtung teleskopartig geführten Spüldüsen 49 radial nach außen vorspannt.

Im Betrieb strömt das über den Einlass 7 zugeführte Unfiltrat in den schmutzseitigen Raum 9 und von diesem über in der Siebplatte 15 ausgebildete Durchlässe in den Innenraum der Filtergehäuse 25 der Filtereinsätze 19 und 21 ein, durchströmt deren Filtermaterial 27 beim Filtervorgang von innen nach außen hin zum reinseitigen Raum 13 und tritt von dort über den Auslass 11 aus. Die Rückspülung erfolgt bei mittels des nicht gezeigten Rückspülventiles geöffnetem Rückspülausgang 47 und bei sich drehenden Spüldüsen 49. Dabei entsteht der Volumenstrom der Rückspülmenge durch den Betriebsdruck des einströmenden Unfiltrats, beispielsweise einem Öldruck im Bereich von 8 bis 10 Bar, aufgrund des Druckgefälles zum geöffneten Rückspülausganges 47. Der Fluidweg innerhalb der Spüldüsen 49 erweitert sich gegenüber dem Öffnungsquerschnitt der Längsschlitze 73, 74 in Richtung zur Antriebswelle 37 hin, was zu einer Art Venturi-Effekt führt und die Strömungsgeschwindigkeit im unmittelbaren Bereich der Längsschlitze 73, 74 erhöht, was die Ablösung von Verschmutzungen begünstigt.

Wie der Vergleich der Fig. 5 und 6 zeigt, ist der Versatz der Längsschlitze 73, 74 in Rotationsrichtung derart gewählt, dass ein Längsschlitz, bei der Darstellung von Fig. 5 und 6 der oberen Längsschlitz 73, auf einen Längssteg 63 des Filtergehäuses 25 ausgerichtet ist, so dass der Fluidweg an dieser Spüldüse 49 geschlossen ist, während gleichzeitig der andere Längsschlitz 74 auf eine Fluid-Durchlassstelle 70 (Fig. 6) ausgerichtet ist. Bei dieser Anordnung verläuft der Rückspülvorgang im Wesentlichen kontinuierlich, d.h. ohne wesentliche Pulsationen der Rückspülmenge. Gleichzeitig ist der Volumenstrom der Rückspülmenge entsprechend begrenzt, da zu jedem Zeitpunkt der volle Durchlassquerschnitt nur einer Fluiddurchlassstelle 70 zur Verfügung steht. Wie die Fig. 5 und 6 ferner zeigen, weisen die inneren Längsstege 63 gegenüber der Radialrichtung eine Schrägstellung auf, so dass die Strömungsrichtung der Durchströmung der Längsschlitze 73, 74 gegenüber der Radialrichtung schräg verläuft. Dadurch ergibt sich in dem Zwischenraum 55 mit dem gefalteten Filtermaterial 27 eine Strömungsrichtung, bei der die Falten des Materials 27 eher an den Breitseiten durchströmt sind, so dass die Abreinigung beim Rückspülvorgang begünstigt ist.

Wie erwähnt, ist beim gezeigten Ausführungsbeispiel ein dritter Filtereinsatz 23 oberhalb des Filtereinsatzes 21 angeordnet. Das Filtergehäuse 29 des obersten Filtereinsatzes 23 weist eine Bodenplatte 84 (Fig. 2) auf, die auf dem oberen Abschlussteil 64 des benachbarten Filtereinsatzes 21 befestigt ist, beispielsweise durch Kleben. An der Bodenplatte 84 sind ein Drehlager 85 für das obere Ende der Antriebswelle 37 sowie Ventilöffnungen 87 für die im Filtergehäuse 29 des obersten Filtereinsatzes 22 befindlichen Bypassventile 31 vorgesehen. Diese weisen Ventilkörper 89 auf, die durch Druckfedern 91 in die die Ventilöffnungen 87 schließende Sperrstellung vorgespannt sind. Bei verblocktem Filtermaterial 27 der Filtereinsätze 19, 21 und dadurch druckbetätigter Öffnung der Ventilöffnungen 87 gelangt Unfiltrat in den Innenraum des Bypass-Filtereinsatzes 23, tritt über das Grobfiltrat 33 aus und gelangt zum reinseitigen Raum 13. Zusammen mit dem Grobfilter 33 ist dadurch eine Sicherheitseinrichtung gebildet, die auch bei verblocktem Filtermaterial 27 eine Ölversorgung ermöglicht.

## Patentansprüche

1. Filtervorrichtung, insbesondere für die Schmierölfiltration, bestehend aus mindestens einem Filtereinsatz (19) in dem jeweils ein Filtermaterial (27) aufgenommen ist und mit Fluid-Durchlassstellen (70) versehen ist, die von Wandteilen (63) des Filtereinsatzes (19) begrenzt sind, und mit einer Rückspüleinrichtung (37, 49), die mindestens eine Spüldüse (49) aufweist, die mittels einer hohlen Antriebswelle (37) entlang der Innenseite des jeweils zuordenbaren Filtereinsatzes (19) verfahrbar ist, wobei für jeden Filtereinsatz (19, 21) mindestens ein Paar von Spüldüsen (49) vorgesehen sind, die in axialer Ausrichtung der Antriebswelle (37) übereinander angeordnete Längsschlitze (73, 74) aufweisen, **dadurch gekennzeichnet, dass** die Längsschlitze (73, 74) derart einen quer zur axialen Ausrichtung verlaufenden Versatz zueinander aufweisen, dass bei benachbart angeordneten Spüldüsen (49) zumindest ein Teil des Längsschlitzes (73) der einen Spüldüse (49) in Deckung mit mindestens einer der Fluid-Durchlassstellen (70) des zuordenbaren Filtereinsatzes (19, 21) und der Längsschlitz (74) der anderen Spüldüse (49) in Deckung mit diese Fluid-Durchlassstelle begrenzenden Wandteilen (63) dieses Filtereinsatzes (19, 21) ist.

2. Filtervorrichtung nach Anspruch 1, **dadurch gekennzeichnet, dass** der jeweilige Filtereinsatz (19, 21) ein Filtergehäuse (25) aufweist, mit zwei konzentrisch zur Längsachse des Filtereinsatzes (19, 21) angeordneten Gehäusewänden (57, 59), zwischen denen sich das Filtermaterial (27) erstreckt und die von den fensterartigen Fluid-Durchlassstellen (70) durchbrochen sind.

3. Filtervorrichtung nach Anspruch 1 oder 2, **dadurch gekennzeichnet, dass** jedes Paar von Spüldüsen (49) mittels der motorisch antreibbaren Antriebswelle (37) der Rückspüleinrichtung gemeinsam entlang der Innenseite des jeweils zuordenbaren, zylindrischen Filtereinsatzes (19, 21) rotatorisch in Hintereinanderabfolge die benachbart angeordneten Fluid-Durchlassstellen (70) im Filtergehäuse (25) überfährt.

4. Filtervorrichtung nach einem der vorstehenden Ansprüche, **dadurch gekennzeichnet, dass** die Antriebswelle (37) für jedes Paar von Spüldüsen (49) eine in Richtung des zuordenbaren Filtergehäuses (25) vorragende Führungseinrichtung (77, 78) aufweist, in die die jeweilige Spüldüse (49) längsverfahrbar geführt eingreift, die mittels eines Energiespeichers (82) gegen die Innenseite dieses Filtergehäuses (25) gedrückt ist.

5. Filtervorrichtung nach einem der vorstehenden Ansprüche, **dadurch gekennzeichnet, dass** der Energiespeicher aus einem elastisch wirkenden Dichtring (82) gebildet ist, der sich mit seiner einen Seite an der Antriebswelle (37) und mit seiner anderen Seite an der jeweiligen Spüldüse (49) abstützt.

6. Filtervorrichtung nach einem der vorstehenden Ansprüche, **dadurch gekennzeichnet, dass** ein Paar von Spüldüsen (49) in einer Baueinheit zusammengefasst ist, die mit ihrem jeweils radial innenliegenden Querschnitt (75) über die Führungseinrichtung (77, 78) in die hohle Antriebswelle (37) einmünden und die mit ihrem jeweils radial außenliegenden Querschnitt in einen Längsschlitz (73, 74) ausmünden, der von seinen Abmessungen her an die Geometrie der jeweils zu überfahrenden Fluid-Durchlassstelle (70) angepasst ist.

7. Filtervorrichtung nach einem der vorstehenden Ansprüche, **dadurch gekennzeichnet, dass** die beiden aus Stützkörpern (51, 53) gebildeten Gehäusewände (57, 59) eines Filtergehäuses (25) an ihren stirnseitig einander gegenüberliegenden Enden von einem ringförmigen Abschlussteil (64, 65) verschlossen sind, das einen Fluidraum für die Aufnahme von Unfiltrat umfasst, und dass das Filtergehäuse (25) zwischen den beiden Stützkörpern (51, 53) von einer ringförmigen Trennwand durchgriffen ist, vorzugsweise gebildet aus einem inneren (66) und einem äußeren Stützring (67).

8. Filtervorrichtung nach einem der vorstehenden Ansprüche, **dadurch gekennzeichnet, dass** sich zwischen den Abschlussteilen (64, 65) und der dazwischenliegenden Trennwand (66, 67) eines Filtergehäuses (25) Längsstäbe (61, 63) für jede Gehäusewand (57, 59) erstrecken, die die fensterartig ausgebildeten Fluid-Durchlassstellen (69, 70) im Filtergehäuse (25) käfigartig zwischen sich einschließen.

9. Filtervorrichtung nach einem der vorstehenden Ansprüche, **dadurch gekennzeichnet, dass** die dem jeweiligen Spüldüsenpaar (49) benachbarten, inneren Längsstäbe (63) der Käfiganordnung gegenüber der Radialrichtung eine Schrägstellung aufweisen, so dass sie für jede Fluid-Durchlassstelle (70) eines Filtereinsatzes(19, 21) eine Strömungsrichtung vorgeben, die um einen vorgebbaren Winkel gegenüber der Einströmrichtung des jeweiligen Längsschlitzes (73, 74) eines Spüldüsenpaares (49) geneigt ist.

10. Filtervorrichtung nach einem der vorstehenden Ansprüche, **dadurch gekennzeichnet, dass** eine Filtrierung vom Inneren des jeweiligen Filtereinsatzes (19, 21) nach außen erfolgt, dass die Rückspülung des jeweiligen Filtereinsatzes (19, 21) von außen nach innen durchgeführt ist und dass die dabei entstehenden Rückspülmengen über die Rückspüleinrichtung aus der Filtervorrichtung abführbar sind.

11. Filtervorrichtung nach einem der vorstehenden Ansprüche, **dadurch gekennzeichnet, dass** der jeweilige Filtereinsatz (19, 21) stationär in einem Vorrichtungsgehäuse (1, 3, 5) angeordnet ist, das einen Fluideinlass (7) für Unfiltrat, einen Fluidauslass (11) für Filtrat und einen Abfuhranschluss (47) für die jeweilige Rückspülmenge aufweist.

12. Filtervorrichtung nach einem der vorstehenden Ansprüche, **dadurch gekennzeichnet, dass** mehrere Filtereinsätze (19, 21) als Gleichteile in Übereinanderanordnung einen Komplett-Elementeinsatz bilden und dass die einzelnen Filtereinsätze (19, 21) unlösbar, vorzugsweise klebend, miteinander verbunden sind.

13. Filtervorrichtung nach einem der vorstehenden Ansprüche, **dadurch gekennzeichnet, dass** der Komplett-Elementeinsatz zusammen mit der Rückspüleinrichtung (37, 49) als Ganzes tauschbar im Vorrichtungsgehäuse (1, 3, 5) aufgenommen ist.

## Claims

1. Filter device, in particular for the filtration of lubricating oil, consisting of at least one filter cartridge (19) in which a filter material (27) is accommodated in each case and which is provided with fluid passage points (70) which are bounded by wall parts (63) of the filter cartridge (19), and with a backflushing device (37, 49) which comprises at least one flushing nozzle (49) that can be moved along the inside of the respectively assignable filter cartridge (19) by means of a hollow drive shaft (37), wherein for each filter cartridge (19, 21) at least one pair of flushing nozzles (49) is provided which have elongated slots (73, 74) arranged one above the other in axial orientation of the drive shaft (37), **characterised in that** the elongated slots (73, 74) have an offset relative to one another extending transverse to the axial orientation in such a manner that, with adjacently arranged flushing nozzles (49), at least part of the elongated slot (73) of the one flushing nozzle (49) is in alignment with at least one of the fluid passage points (70) of the assignable filter cartridge (19, 21) and the elongated slot (74) of the other flushing nozzle (49) is in alignment with wall parts (63) of this filter cartridge (19, 21) which bound this fluid passage point.

2. Filter device according to claim 1, **characterised in that** the respective filter cartridge (19, 21) comprises a filter housing (25), with two housing walls (57, 59) arranged concentric to the longitudinal axis of the filter cartridge (19, 21), between which housing walls the filter material (27) extends and which are pierced by the window-like fluid passage points (70).

3. Filter device according to claim 1 or 2, **characterised in that** each pair of flushing nozzles (49), by means of the motor-drivable drive shaft (37) of the backflushing device, passes jointly along the inside of the respectively assignable cylindrical filter cartridge (19, 21), rotationally in succession, over the adjacently arranged fluid passage points (70) in the filter housing (25).

4. Filter device according to one of the preceding claims, **characterised in that** the drive shaft (37) has, for each pair of flushing nozzles (49), a guide device (77, 78) protruding towards the assignable filter housing (25), into which guide device the respective flushing nozzle (49) engages in a guided manner so as to be longitudinally movable, said flushing nozzle being pressed against the inside of this filter housing (25) by means of an energy accumulator (82).

5. Filter device according to one of the preceding claims, **characterised in that** the energy accumulator is formed of an elastically acting sealing ring (82) which is supported with its one side on the drive shaft (37) and with its other side on the respective flushing nozzle (49).

6. Filter device according to one of the preceding claims, **characterised in that** a pair of flushing nozzles (49) is combined in a structural unit which flushing nozzles open with their respective radially internal cross-section (75) into the hollow drive shaft (37) via the guide device (77, 78) and which open out with their respective radially external cross-section into an elongated slot (73, 74) which is matched in terms of its dimensions to the geometry of the respective fluid passage point (70) to be passed over.

7. Filter device according to one of the preceding claims, **characterised in that** the two housing walls (57, 59) of a filter housing (25), which are formed of supporting bodies (51, 53), are closed at their ends on faces opposing each other by an annular end part (64, 65), which comprises a fluid space for receiving unfiltered medium, and **in that** the filter housing (25) is penetrated between the two supporting bodies (51, 53) by an annular separating wall, preferably formed of an inner (66) and an outer support ring (67).

8. Filter device according to one of the preceding claims, **characterised in that** longitudinal rods (61, 63) for each housing wall (57, 59) extend between the end parts (64, 65) and the intermediate separating wall (66, 67) of a filter housing (25), which rods enclose the window-like fluid passage points (69, 70) in the filter housing (25) between them in a cage-like manner.

9. Filter device according to one of the preceding claims, **characterised in that** the inner longitudinal rods (63) of the cage arrangement, which are adjacent to the respective pair of flushing nozzles (49), have an inclined position with respect to the radial direction, so that for each fluid passage point (70) of a filter cartridge (19, 21) they define a flow direction which is inclined by a predefinable angle with respect to the inflow direction of the respective elongated slot (73, 74) of a pair of flushing nozzles (49).

10. Filter device according to one of the preceding claims, **characterised in that** a filtration takes place from the inside of the respective filter cartridge (19, 21) to the outside, **in that** the backflushing of the respective filter cartridge (19, 21) is performed from outside to inside and **in that** the backflush volumes thus produced can be discharged from the filter device via the backflushing device.

11. Filter device according to one of the preceding claims, **characterised in that** the respective filter cartridge (19, 21) is arranged stationary in a device housing (1, 3, 5) which has a fluid inlet (7) for unfiltered medium, a fluid outlet (11) for filtrate and a discharge connection (47) for the respective backflush volume.

12. Filter device according to one of the preceding claims, **characterised in that** a plurality of filter cartridges (19, 21) form a complete element cartridge as identical parts arranged one above the other and **in that** the individual filter cartridges (19, 21) are non-detachably, preferably adhesively, joined together.

13. Filter device according to one of the preceding claims, **characterised in that** the complete element cartridge together with the backflushing device (37, 49) is accommodated in the device housing (1, 3, 5) as a replaceable whole.

## Revendications

1. Dispositif de filtration, en particulier pour la filtration d'huile lubrifiante, constitué d'au moins un insert (19) de filtre, dans lequel est reçu respectivement une matière (27) filtrante et qui est pourvu de points (70) de traversée de fluide, qui sont délimités par des parties (63) de paroi de l'insert (19) de filtre, et comprenant un dispositif (37, 49) de lavage en retour, qui a au moins une buse (49) de lavage, laquelle peut, au moyen d'un arbre (37) d'entraînement creux, être déplacée le long de la face intérieure de l'insert (19) de filtre pouvant être associé respectivement, dans lequel, pour chaque insert (19, 21) de filtre, sont prévues au moins une paire de buses (49) de lavage, qui ont des fentes (73, 74) oblongues disposées les unes au-dessus des autres dans la direction axiale de l'arbre (37) d'entraînement, **caractérisé en ce que** les fentes (73, 74) oblongues ont les unes par rapport aux autres un décalage s'étendant transversalement à la direction axiale, de manière à ce que, pour des buses (49) de lavage voisines, au moins une partie de la fente(73) oblongue de l'une des buses (49) de lavage soit à recouvrement avec au moins l'un des points (70) de traversée de fluide de l'insert (19, 21) d'un filtre pouvant être associé et de manière à ce que la fente (74) oblongue de l'autre buse (49) de lavage soit à recouvrement avec des parties (63) de paroi, délimitant ce point de traversée de fluide, de cet insert (19, 21) de filtre.

2. Dispositif de filtration suivant la revendication 1, **caractérisé en ce que** l'insert (19, 21) de filtre respectif a une enveloppe (25) de filtre, ayant deux parois (57, 59) d'enveloppe disposées concentriquement à l'axe longitudinal de l'insert (19, 21) de filtre, entre lesquelles la matière (27) filtrante s'étend et qui sont interrompues par les points (70) de traversée de fluide du type en fenêtre.

3. Dispositif de filtration suivant la revendication 1 ou 2, **caractérisé en ce que** chaque paire de buses (49) de lavage passe au moyen de l'arbre (37) d'entraînement pouvant être entraîné par un moteur, du dispositif de lavage en retour, conjointement le long de la face intérieure de l'insert (19, 21) de filtre cylindrique, pouvant être associé respectivement, l'une derrière l'autre en rotation sur les points (70) de traversée de fluide voisins dans l'enveloppe (25) de filtre.

4. Dispositif de filtration suivant l'une des revendications précédentes, **caractérisé en ce que** l'arbre (37) d'entraînement a, pour chaque paire de buses (49) de lavage, un dispositif (77, 78) de guidage, qui est en saillie dans la direction de l'enveloppe (25) de filtre pouvant être associée et dans lequel pénètre, de manière guidée, avec possibilité de se déplacer longitudinalement, la buse (49) respective de lavage, qui est repoussée contre la face intérieure de cette enveloppe (25) de filtre au moyen d'un accumulateur (82) d'énergie.

5. Dispositif de filtration suivant l'une des revendications précédentes, **caractérisé en ce que** l'accumulateur d'énergie est formé d'une bague (82) d'étanchéité à effet élastique, qui s'appuie par l'un de ses côtés sur l'arbre (37) d'entraînement, et par son autre côté sur la buse (49) de lavage respective.

6. Dispositif de filtration suivant l'une des revendications précédentes **caractérisé en ce qu'**une paire de buses (49) de lavage est rassemblée en une unité de construction, qui débouche, par sa section (75) transversale se trouvant à l'intérieur radialement, par l'intermédiaire du dispositif (77,78) de guidage, dans l'arbre (37) d'entraînement creux et qui débouche par sa section transversale se trouvant radialement à l'extérieur, dans une fente (73,74) oblongue, laquelle est adaptée par ses dimensions à la géométrie du point (70) de traversée de fluide respectif, sur lequel il faut passer.

7. Dispositif de filtration suivant l'une des revendications précédentes, **caractérisé en ce que** les deux parois (57, 59) d'une enveloppe (25) de filtre, formées de corps (51, 53) d'appui, sont fermées à leur extrémité opposée l'une à l'autre du côté frontal par une partie (64,65) de fermeture annulaire, qui entoure un espace pour du fluide pour la réception d'un non-filtrat, et **en ce que** l'enveloppe (25) de filtre est traversée entre les deux corps (51, 53) d'appui par une cloison annulaire, formée de préférence d'un anneau (66) intérieur d'appui et d'un anneau (67) extérieur d'appui.

8. Dispositif de filtration suivant l'une des revendications précédentes, **caractérisé en ce qu'**entre les parties (64, 65) de fermeture et la cloison (66, 67) intermédiaire d'une enveloppe (25) de filtre, s'étendent des barres (61, 63) longitudinales pour chaque paroi (57, 59) de l'enveloppe, qui enferment entre elles à la manière d'une cage dans l'enveloppe (25) de filtre, les points (69, 70) de traversée de filtre constitués à la manière d'une fenêtre.

9. Dispositif de filtration suivant l'une des revendications précédentes, **caractérisé en ce que** les barres (63) longitudinales intérieures, voisines de la paire (49) respective de buses de lavage de l'agencement en cage, ont, par rapport à la direction radiale, une position inclinée de sorte qu'elles prescrivent, pour chaque point (70) de traversée de fluide d'un insert (19, 21) de filtre, une direction d'écoulement, qui est inclinée d'un angle pouvant être donné à l'avance par rapport à la direction d'entrée de la fente (73, 74) oblongue respective d'une paire (49) de buses de lavage.

10. Dispositif de filtration suivant l'une des revendications précédentes, **caractérisé en ce qu'**une filtration s'effectue de l'intérieur de l'insert (19, 21) de filtre vers l'extérieur, **en ce que** le lavage en retour de l'insert (19, 21) de filtre respectif s'effectue de l'extérieur vers l'intérieur et **en ce que** les quantités de lavage en retour ainsi créées peuvent être évacuées du dispositif de filtration par le dispositif de lavage en retour.

11. Dispositif de filtration suivant l'une des revendications précédentes, **caractérisé en ce que** l'insert (19, 21) respectif de filtre est monté stationnaire dans une enveloppe (1, 3, 5) de dispositif, qui a une entrée (7) de fluide pour du non-filtrat, une sortie (11) de fluide pour du filtrat et un raccord (47) d'évacuation pour la quantité respective de lavage en retour.

12. Dispositif de filtrations suivant l'une des revendications précédentes, **caractérisé en ce que** plusieurs inserts (19, 21) de filtre forment, en tant que parties pareilles dans un agencement superposé, un insert d'élément complet, et **en ce que** les divers inserts (19, 21) de filtre sont reliés entre eux de manière indissociable, en étant de préférence collés.

13. Dispositif de filtration suivant l'une des revendications précédentes, **caractérisé en ce que** l'insert d'élément complet est reçu ensemble avec le dispositif (37, 49) de lavage en retour dans l'enveloppe (1, 3, 5) de dispositif, avec possibilité d'être échangé sous la forme d'un tout.
